# EUROPÄISCHE PATENTSCHRIFT

(11) **EP 2 857 236 B1**
(45) Veröffentlichungstag und Bekanntmachung des Hinweises auf die Patenterteilung: **03.10.2018**
(21) Anmeldenummer: 14180567.1
(22) Anmeldetag: 11.08.2014
(51) Int. Cl.: B60G 13/00, B60G 99/00, B60N 2/50, B60N 2/52, F16F 9/18

(54) **Stoßdämpfer**
Shock absorber
Amortisseur

(30) Priorität: 01.10.2013 DE 102013110919
(43) Veröffentlichungstag der Anmeldung: 08.04.2015
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A1- 1 186 467
- EP-A2- 0 322 608
- DE-A1- 4 216 987
- DE-A1-102007 039 215
- DE-A1-102009 022 763
- DE-A1-102011 100 307
- DE-B3- 10 306 564
- DE-B3-102005 048 949
- DE-U1-202007 013 300
- FR-A- 1 081 491
- US-A- 3 470 692
- US-A1- 2004 251 097
- US-A1- 2010 072 760

## Beschreibung

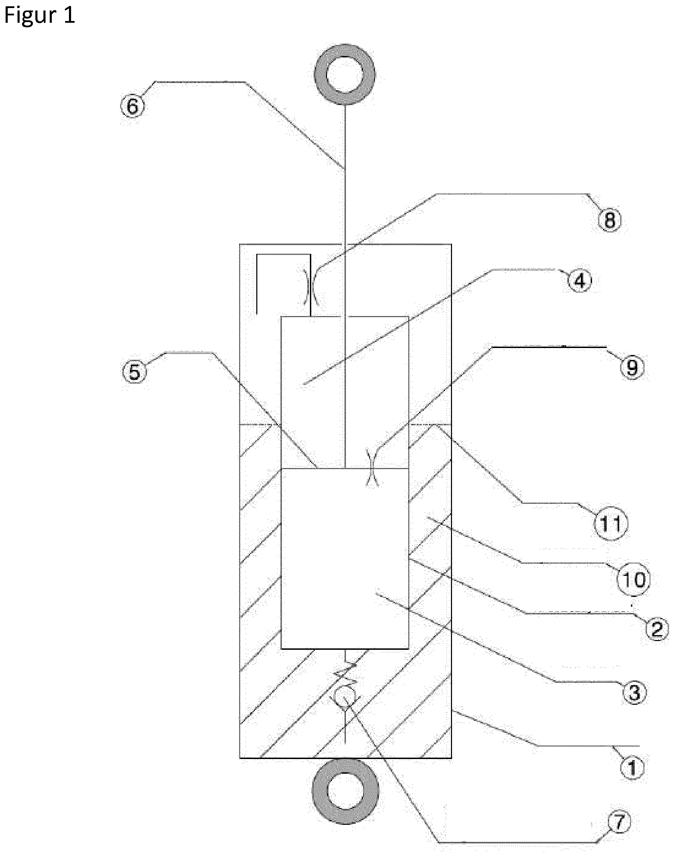

Die Erfindung betrifft einen Stoßdämpfer nach dem Oberbegriff des Patentanspruchs 1.
Ein solcher Stoßdämpfer ist beispielhaft in der Figur 1 dargestellt. Dieser Stoßdämpfer nach dem Stand der Technik weist ein Gehäuse mit einem daran angeordneten Innenrohr auf, wobei in das Innenrohr eine Kolbenstange eintaucht, an deren in das Innenrohr eintauchenden Ende ein Kolben angeordnet ist, der das Innere des Innenrohrs in eine untere Kammer und eine obere Kammer teilt. Dabei ist an dem Kolben eine Ventilanordnung angeordnet, mittels welcher ein in dem Innenrohr aufgenommenes Arbeitsmedium beim Verfahren des Kolbens im Innenrohr aus der unteren Kammer in die obere Kammer und umgekehrt strömen kann. Am oberen Ende des Innenrohres ist eine zweite Ventilanordnung angeordnet, mittels welcher das in dem Innenrohr aufgenommene Arbeitsmedium beim Verfahren des Kolbens im Innenrohr aus der oberen Kammer lediglich in das als Tank für das Arbeitsmedium dienende Innere des Gehäuses strömen kann. Schließlich weist das Innenrohr an seinem unteren Ende eine dritte Ventilanordnung auf, mittels welcher das in dem als Tank dienenden Inneren des Gehäuses aufgenommene Arbeitsmedium beim Verfahren des Kolbens im Innenrohr lediglich in die untere Kammer des Innenrohres strömen kann.
Solche Stoßdämpfer nach dem Stand der Technik werden üblicherweise als Zweirohrdämpfer bezeichnet. Derartige Zweirohrdämpfer werden als passive Stoßdämpfer zum einen als nicht verstellbare und zum anderen als verstellbare Stoßdämpfer verwendet.

Bei einem nicht verstellbaren Zweirohrdämpfer sind die Eigenschaften des Dämpfers beziehungsweise der Dämpfung fest definiert, sodass der Strömungswiderstand des Arbeitsmediums durch die in dem Dämpfer verwendeten Ventilanordnungen festgelegt ist.

Verstellbare Zweirohrdämpfer werden dann angewendet, wenn die zu leistende Arbeit des Stoßdämpfers an entsprechende Fahrzeugzustände eines Fahrzeuges, in welches ein solcher verstellbarer Zweirohrdämpfer eingebaut ist, beziehungsweise den gefederten, unterschiedlich großen Massen anzupassen ist. Bei solchen passiven, hydraulisch verstellbaren Zweirohrdämpfern wird dies dadurch erreicht, dass der Strömungswiderstand über eine variable Ventilbohrung in der an dem Kolben angeordneten Ventilanordnung zwischen der oberen und der unteren Kammer des Innenrohres des Dämpfers verändert werden kann.

Ein weiteres Merkmal von passiv, nicht verstellbar betriebenen Dämpfern besteht darin, dass die bei einem definierten Arbeitshub ausgetauschte Ölmenge immer gleich ist. Der Strömungswiderstand ist allein von der Geschwindigkeit des Kolbens innerhalb des Innenrohres abhängig.

Bei passiv, verstellbar betriebenen Dämpfern wird bei ebenfalls gleichdefiniertem Hub der Strömungswiderstand zusätzlich zu der Geschwindigkeit des Kolbens durch die Veränderung des Ventilquerschnittes der Ventilanordnung im Kolben beeinflusst. Die ausgetauschte Ölmenge ist bei definiertem Hub ebenfalls gleich.

Nachfolgend wird die Funktionsweise eines solchen Zweirohrdämpfers nach dem Stand der Technik kurz erläutert.

Beim Einfahren des Dämpfers bewegt sich der Kolben im Innenrohr nach unten, sodass die untere Kammer des Innenrohres in ihrem Volumen abnimmt, während die obere Kammer des Innenrohres in ihrem Volumen zunimmt. Bei diesem Einfahren des Dämpfers wird über die Ventilanordnung des Kolbens eine gewisse Menge an Öl, welches hier als Arbeitsmedium dient, von der unteren Kammer in die obere Kammer geleitet, wobei dadurch ein definierter Strömungswiderstand über die Ventilanordnung des Kolbens durch dessen Geschwindigkeit erzeugt wird. Die dabei durch das Eintauchen der Kolbenstange zusätzlich verdrängte Ölmenge in der oberen Kammer des Innerohres wird über die am oberen Ende des Innerohres angeordnete Ventilanordnung in den als Tank für das Arbeitsmedium beziehungsweise Öl dienende Gehäuse abgeleitet.

Wird nun das Ausfahren des Dämpfers initiiert, bewegt sich der Kolben innerhalb des Innenrohres unter Volumenreduzierung der oberen Kammer und Volumenerhöhung der unteren Kammer nach oben, wobei die auszutauschende Menge an Öl beziehungsweise Arbeitsmittel über die Ventilanordnung am oberen Ende des Innerohres von der oberen Kammer in das als Tank für das Arbeitsmedium dienende Innere des Gehäuses beziehungsweise den dortigen Ölsumpf geleitet wird. Die Differenzmenge an Öl beziehungsweise Arbeitsmittel, die durch das Ausfahren der Kolbenstange erforderlich ist, wird über die am Boden des Innenrohres angeordnete Ventilanordnung aus dem als Tank für das Arbeitsmedium dienende Innere des Gehäuses beziehungsweise dem dortigen Ölsumpf nachgesaugt.
Wie gerade verdeutlicht, bewegt sich das Arbeitsmittel beziehungsweise das Öl innerhalb des Dämpfers in einem Kreislauf.
Dadurch, dass ein solcher Zweirohrdämpfer für seine Anwendung - passiv verstellbar oder passiv nicht verstellbar - entsprechend vorkonfektioniert sein muss, ist es nicht möglich, einen einmal bereitgestellten Dämpfer für einen anderen Anwendungszweck zu verwenden.

Das Dokument EP 0 322 608 A2 offenbart einen anderen Stoßdämpfer. Es ist daher Aufgabe der Erfindung, einen Stoßdämpfer der eingangs genannten Art zur Verfügung zu stellen, mit welchem verschiedene Anwendungszwecke realisierbar sind.
Gelöst wird diese Aufgabe durch einen Stoßdämpfer mit den Merkmalen des Patentanspruchs 1. Vorteilhafte Ausgestaltungen des erfindungsgemäßen Stoßdämpfers finden sich in den Unteransprüchen.
Der erfindungsgemäße Stoßdämpfer weist neben den Merkmalen des Oberbegriffs des Patenanspruchs 1 zusätzlich die Merkmale auf, dass das Arbeitsmedium Öl ist und dass an der unteren Kammer des Innenrohres ein erstes Anschlusselement und an der oberen Kammer des Innenrohres ein zweites Anschlusselement zum Anschluss einer Einrichtung zur Steuerung des Strömungswiderstandes des Arbeitsmediums in der ersten Ventilanordnung vorgesehen ist und dass an dem oberen Ende des Innenrohres ein Steigrohr angeordnet ist, welches über einen Ölsumpfspiegel in einen Ölsumpf innerhalb des Gehäuses hineinragt und mittels welchem Öl aus dem als Tank dienenden Gehäuse in die obere Kammer des Innenrohres überführbar ist, wobei der Ölsumpfspiegel benachbart zum Innenrohr angeordnet ist. Durch die erfindungsgemäße Ausgestaltung des Stoßdämpfers kann an den Anschlüssen an der unteren und oberen Kammer eine Einrichtung zur Steuerung des Strömungswiderstandes des Arbeitsmediums in der Ventilanordnung des Kolbens vorgenommen werden. Somit ist es möglich, den erfindungsgemäßen Stoßdämpfer für unterschiedliche Anwendungszwecke zu verwenden und auch modular aufzubauen. Wird nämlich an die zusätzlichen Anschlüsse an der oberen und unteren Kammer keine Einrichtung zur Steuerung des Strömungswiderstandes des Arbeitsmediums in der Ventilanordnung des Kolbens angeordnet, so kann der Stoßdämpfer wie ein handelsüblicher Stoßdämpfer passiv und nicht verstellbar betrieben werden, wenn die zusätzlichen Anschlüsse verschlossen sind. Wird jedoch eine solche Steuereinrichtung an die zusätzlichen Anschlüsse der unteren und oberen Kammer angeschlossen, wobei diese Anschlüsse nun offen und für das Arbeitsmedium beziehungsweise Öl auf Durchgang geschaltet sind, lässt sich der erfindungsgemäße Stoßdämpfer nunmehr passiv verstellbar, aktiv verstellbar, semiaktiv verstellbar und über eine entsprechende Ansteuerung der Einrichtung zur Steuerung des Strömungswiderstandes des Arbeitsmediums in der Ventilanordnung des Kolbens adaptiv betreiben. Das Steigrohr dient insbesondere dazu, dass bei einem externen Betrieb, bei dem die Arbeitsmittelmenge beziehungsweise Ölmenge zwischen der unteren Kammer und der oberen Kammer über eine Hydraulikpumpe ausgetauscht werden kann, keine Kavitation entsteht. Dadurch ist durch das Steigrohr unter allen Umständen zwischen der oberen und unteren Kammer ein geschlossener Ölkreislauf gewährleistet. Bei einem externen Betrieb des Stoßdämpfers, bei dem die Ölmenge zwischen der unteren Kammer und der oberen Kammer, beispielsweise über eine Hydraulikpumpe, ausgetauscht wird, kann somit keine Kavitation entstehen. Solche Kavitationen wären nachteilig für die Arbeitsweise des Stoßdämpfers, da sie sich äußerst negativ auf dessen Dämpfungseigenschaften auswirken. Ferner garantiert dieses Steigrohr auch bei externem Betrieb, dass ein geschlossener Ölkreislauf sichergestellt ist.

Solche erfindungsgemäße Stoßdämpfer können nicht nur in den Radaufhängungen und Federbeinen der unterschiedlichsten Fahrzeuge Verwendung finden. Vielmehr ist es auch möglich, damit Schwingungen von Sitzen, insbesondere von gefederten Fahrzeugsitzen und gefederten Kabinen zu dämpfen. Zudem ist eine Kombination einer Dämpfung einer Kabinenfederung und gefederten Fahrsitze, beispielsweise eines Schienenfahrzeuges denkbar. Auch ist der Einsatz der erfindungsgemäßen Stoßdämpfer nicht auf solche Einsätze beschränkt, sondern kann in allen möglichen Vorrichtungen zum Einsatz kommen, bei denen eine entsprechende Dämpfung von Schwingungen wünschenswert ist.

Nach einer ersten vorteilhaften Ausgestaltung der Erfindung ist als Einrichtung zur Steuerung des Strömungswiderstandes des Arbeitsmediums in der Ventilanordnung des Kolbens ein Magnetventil vorgesehen, welches zwischen einer an dem unteren Anschlusselement angeschlossenen Druckleitung und einer an dem oberen Anschlusselement angeschlossenen Druckleitung angeordnet ist. Durch diese Ausgestaltung ist es ermöglicht, zwei Dämpfungsarten des Dämpfers zu realisieren. Dies wäre zum Einen eine harte Dämpfung, bei dem das Magnetventil geschlossen ist, sodass der erfindungsgemäße Stoßdämpfer weiterhin als passiv nicht verstellbarer Stoßdämpfer betrieben wird. Wird das Magnetventil geöffnet, so kann zwischen der oberen Kammer des Innenrohres und der unteren Kammer des Innenrohres ein zusätzlicher Arbeitsmedium- beziehungsweise Ölaustausch stattfinden, sodass die Strömungsgeschwindigkeit des Arbeitsmediums durch die Ventilanordnung des Kolbens verändert ist und somit eine weichere Dämpfung stattfindet. Auch mit offenem Magnetventil wird daher der Stoßdämpfer passiv nicht verstellbar betrieben. Allerdings kann durch die zwei Einstellmöglichkeiten "Magnetventil geschlossen" und "Magnetventil geöffnet" zwischen einer harten und einer weichen Dämpfung gewechselt werden.

Nach einer weiteren besonders vorteilhaften Ausgestaltung der Erfindung ist als Einrichtung zur Steuerung des Strömungswiderstandes des Arbeitsmediums in der Ventilanordnung des Kolbens ein Proportional-Stromregelventil vorgesehen, welches zwischen einer an dem unteren Anschlusselement angeschlossenen Druckleitung und einer an dem oberen Anschlusselement angeschlossenen Druckleitung angeordnet ist. Durch dieses Proportional-Stromventil ist es möglich, die Strömungsgeschwindigkeit in den Druckleitungen zwischen dem oberen Anschlusselement und dem Proportional-Stromregelventil und der unteren Druckleitung und dem Proportional-Stromregelventil kontinuierlich zwischen den Zuständen des Proportional-Stromregelventils vollständig geschlossen und vollständig geöffnet zu variieren. Somit ist eine einstellbare kontinuierliche Dämpfung möglich, durch welche nicht nur zwischen einer harten und einer weichen Dämpfung gewählt werden kann, sondern auch zwischen allen Dämpfungswerten dazwischen.

Nach einem anderen Gedanken der Erfindung ist als Einrichtung zur Steuerung des Strömungswiderstandes des Arbeitsmediums in der Ventilanordnung des Kolbens ein Hydraulikpumpenantrieb vorgesehen, welcher zwischen einer an dem unteren Anschlusselement angeschlossenen Druckleitung und einer an dem oberen Anschlusselement angeschlossenen Druckleitung angeordnet ist. Über einen solchen Hydraulikpumpenantrieb kann die bei einem definierten Verfahren des Kolbens im Innenrohr ausgetauschte Arbeitsmedium- beziehungsweise Ölmenge erhöht und/oder reduziert werden. Durch diese Ausgestaltung ist es möglich, eine Niveausteuerung des Stoßdämpfers zusätzlich zur Erhöhung beziehungsweise Absenkung der Dämpferkräfte zu erzielen. Insbesondere kann eine solche Ausgestaltung bei einem Sitz, insbesondere bei einem Fahrersitz eines Schienenfahrzeuges, zur Sitzhöhenkorrektur beziehungsweise ansonsten auch für eine temporäre Nivellierung genutzt werden.

Natürlich ist es auch möglich, als Einrichtung zur Steuerung des Strömungswiderstandes des Arbeitsmediums in der Ventilanordnung des Kolbens einen Hydraulikpumpenantrieb in Kombination mit einer Ventilanordnung, insbesondere eines Magnetventils oder eines Proportional-Stromregelventils, vorzusehen. Hierdurch können die zuvor für die einzelnen Einrichtungen beschriebenen Vorteile und Anwendungsmöglichkeiten in Kombination genutzt werden.

Weiterhin hat es sich als vorteilhaft herausgestellt, dass der Hydraulikpumpenantrieb eine regelbare Pumpe und einen Motor für die Pumpe aufweist.

Da beim Betrieb einer Pumpe immer auch mit entsprechenden Leckagen, insbesondere, wenn mit hohen Drücken gearbeitet wird, gerechnet werden muss, ist zwischen dem als Tank für das Arbeitsmedium dienende Gehäuse und dem Hydraulikpumpenantrieb, insbesondere der regelbaren Pumpe, eine Leckleitung für das Arbeitsmedium vorgesehen. Durch eine solche Leckleitung kann das an der Pumpe austretende Arbeitsmedium beziehungsweise Öl in den Tank zurückgeführt werden, sodass der Arbeitsmittel- beziehungsweise Ölverbrauch des erfindungsgemäßen Stoßdämpfers reduziert und eine Umweltverschmutzung vermieden ist.

Zum Druckausgleich kann zudem zwischen dem als Tank für das Arbeitsmedium dienenden Gehäuse und der unteren Druckleitung und/oder der oberen Druckleitung eine Nachsaugleitung für das Arbeitsmedium vorgesehen sein. Diese Nachsaugleitung kann zudem über Rückschlagventile von der unteren Druckleitung und/oder der oberen Druckleitung getrennt sein.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Stoßdämpfer nach dem Stand der Technik,
- Figur 2:: ein erstes Ausführungsbeispiel eines erfindungsgemäßen Stoßdämpfers,
- Figur 3:: ein zweites Ausführungsbeispiel eines erfindungsgemäßen Stoßdämpfers,
- Figur 4:: ein drittes Ausführungsbeispiel eines erfindungsgemäßen Stoßdämpfers,
- Figur 5:: ein viertes Ausführungsbeispiel eines erfindungsgemäßen Stoßdämpfers und
- Figur 6:: einen Fahrzeugsitz mit Federung, in welchen ein erfindungsgemäßer Stoßdämpfer eingebaut ist.

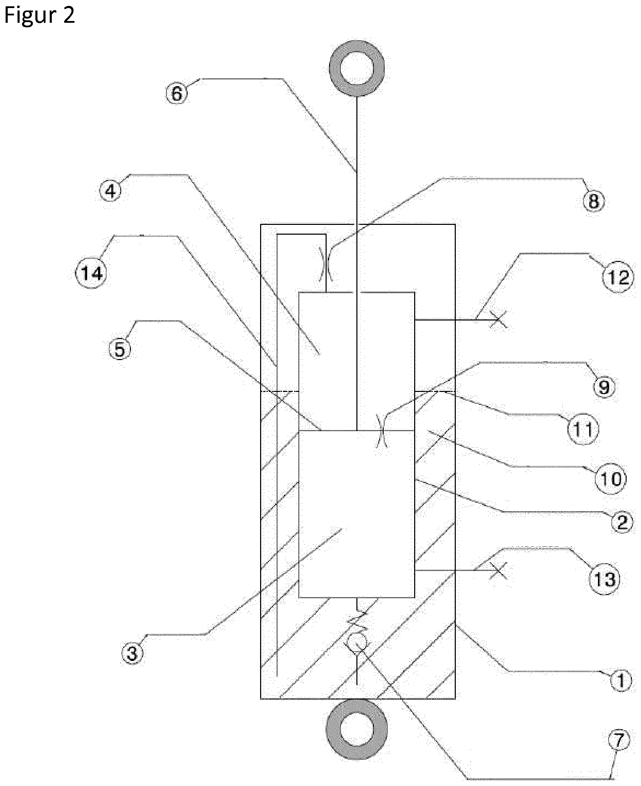

In Figur 2 ist ein erstes Ausführungsbeispiel eines erfindungsgemäßen Stoßdämpfers gezeigt. Der Stoßdämpfer besteht im Wesentlichen aus einem Gehäuse 1, welches rohrförmig ausgebildet ist, in dem ein Innenrohr 2 ortsfest angeordnet ist. In dem Innenrohr 2 ist ein Kolben 5 mittels einer Kolbenstange 6 hin und her verfahrbar, wobei das Innenrohr 2 durch den Kolben 5 in eine obere Kammer 4 und in eine untere Kammer 3 geteilt ist. Das Innenrohr 2 ist dabei vollständig mit einem Arbeitsmedium vorzugsweise mit einem Öl gefüllt. In dem Kolben 5 ist dabei eine erste Ventilanordnung 9 angebracht. Diese Ventilanordnung 9 ist derart ausgestaltet, dass es durch das Öl in beide Richtungen passierbar ist. Da beim Verfahren des Kolbens 5 innerhalb des Innenrohres 2 von oben nach unten durch die Kolbenstange 6 zusätzlich Öl verdrängt wird, muss das Öl Gelegenheit haben, aus der oberen Kammer 4 zu entweichen. Dazu ist an dem oberen Ende des Innenrohres 2 eine zweite Ventilanordnung 8 vorgesehen, durch welche Öl aus der oberen Kammer in den als Tank dienenden Behälter 1 entweichen kann. Die Ventilanordnung 8 ist dabei nur zur Passage des Öls in diese Richtung ausgelegt. Ein Durchtritt von Öl aus dem Behälter 1 in die obere Kammer 4 des Innenrohres 2 ist durch die Ventilanordnung 8 hindurch nicht möglich. Da beim Verfahren des Kolbens 5 innerhalb des Innenrohres 2 von unten nach oben die untere Kammer 3 eine Volumenvergrößerung erfährt, während die obere Kammer eine Volumenreduzierung erfährt, ist am unteren Ende des Innenrohres 2 eine dritte Ventilanordnung 7 vorgesehen. Hierdurch ist es möglich, dass Öl aus dem Behälter 1, in welchem es bevorratet wird, in die untere Kammer 3 des Innenrohres 2 hineintritt, während aufgrund der Volumenreduzierung der oberen Kammer 4 dortiges Öl über die Ventilanordnung 8 in den Behälter 1 gelangt.

Weiterhin weist dieses Ausführungsbeispiel an der oberen Kammer 4 des Innenrohres 2 ein Anschlusselement 12 und die untere Kammer 3 des Innenrohres 2 ein Anschlusselement 13 auf. In der Darstellung der Figur 2 sind die Anschlusselemente 12 und 13 abgesperrt, so dass dadurch kein Arbeitsmedium beziehungsweise Öl aus dem Innenrohr 2 heraus beziehungsweise in das Innenrohr 2 hinein treten kann. In dieser Ausgestaltung des Ausführungsbeispiels arbeitet der erfindungsgemäße Stoßdämpfer in passiver, nicht verstellbarer Weise, welche identisch zu der des in Figur 1 dargestellten Stoßdämpfers gemäß dem Stand der Technik ist.

Allerdings ist es möglich, an die Anschlusselemente 12 und 13 eine Einrichtung zur Steuerung des Strömungswiderstandes des Arbeitsmediums beziehungsweise Öles in der Ventilanordnung 9 am Kolben 5 anzuschließen. In einer ersten Ausgestaltung kann dies beispielsweise ein Magnetventil sein, welches durch zwei definierte Zustände, nämlich "auf" und "zu" charakterisierbar ist. Mittels eines solchen Magnetventils lässt sich der Strömungswiderstand des Arbeitsmediums beziehungsweise des Öles innerhalb der Ventilanordnung 9 des Kolbens 5 zwischen einer harten und einer weichen Dämpfung variieren. Die harte Dämpfung tritt dann auf, wenn das Magnetventil geschlossen ist, während eine weiche Dämpfung bei offenem Magnetventil gegeben ist. Bei offenem Magnetventil wird nämlich der Strömungswiderstand innerhalb der Ventilanordnung 9 geändert, da das in dem Innenrohr 2 befindliche Arbeitsmedium beziehungsweise Öl nunmehr auch die Möglichkeit hat, durch das Anschlusselement 12 an der oberen Kammer 4 durch das Magnetventil hindurch und durch das Anschlusselement 13 in die untere Kammer 3 zu treten. Hierdurch findet ein Ölausgleich beziehungsweise Arbeitsmittelausgleich zwischen oberer Kammer und unterer Kammer statt, der sowohl beim Herabbewegen des Kolbens 5 als auch beim Heraufbewegen des Kolbens 5 innerhalb des Innenrohres 2 auftritt.

Ferner weist das Ausführungsbeispiel der Figur 2 ein am oberen Ende des Innenrohres 2 angeordnetes Steigrohr 14 auf, welches über einen Ölsumpfspiegel 11 in den Ölsumpf 10 innerhalb des Behälters 1 hineinragt. Diese Steigleitung 14 dient dazu, dass bei externem Betrieb des Stoßdämpfers, bei dem die Ölmenge zwischen der unteren Kammer 3 und der oberen Kammer 4 über eine Hydraulikpumpe ausgetauscht wird, keine Kavitation entsteht. Solche Kavitationen wären nachteilig für die Arbeitsweise des Stoßdämpfers. Ferner garantiert dieses Steigrohr 14 auch bei externem Betrieb, dass ein geschlossener Ölkreislauf sichergestellt ist.

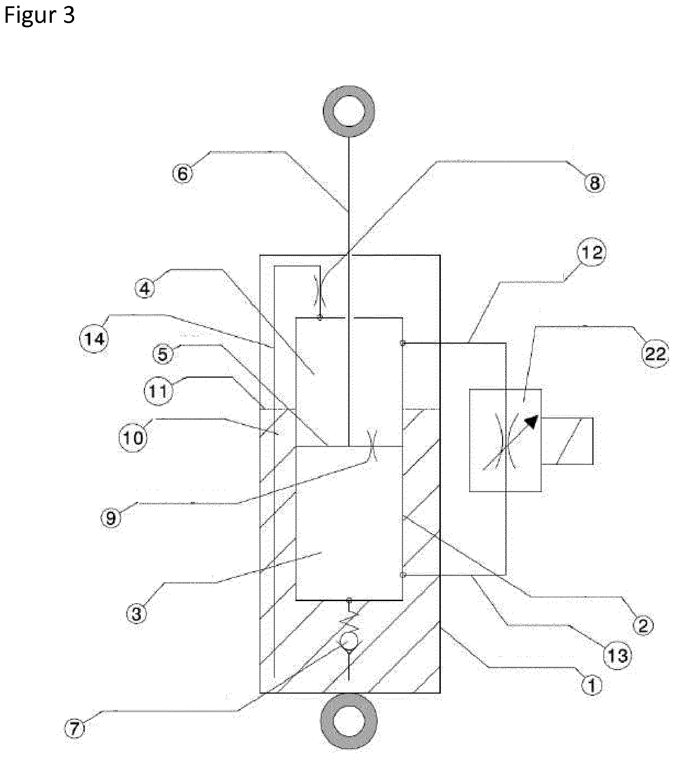

In Figur 3 ist ein weiteres Ausführungsbeispiel eines erfindungsgemäßen Stoßdämpfers gezeigt. Hierbei ist als Einrichtung zur Steuerung des Strömungswiderstandes des Arbeitsmediums in der Ventilanordnung 9 des Kolbens 5 ein Proportional-Stromregelventil vorgesehen, welches zwischen einer an dem unteren Anschlusselement 13 angeschlossenen Druckleitung 18 und einer an dem oberen Anschlusselement 12 angeschlossenen Druckleitung 17 angeordnet ist. Mittels eines solchen Proportional-Stromregelventils 22 ist es möglich, den Strömungswiderstand des Öls darin in Anhängigkeit von der Stromstärke zu regeln. Insofern ist es hiermit möglich, über dieses Proportional-Stromregelventil 22 die Leistung des Stoßdämpfers und somit die Dämpfung entsprechend den erforderlichen Lastfällen anzupassen. Eine passive Grundeinstellung des Stoßdämpfers ist hierbei als harte Einstellung vorgesehen, wobei der Stoßdämpfer in diesem unbestromten Zustand seine höchste Leistung erbringt. Bei Aktivierung des Proportional-Stromregelventils 22 wird eine Reduzierung der Dämpferkräfte bewirkt, da ein gewisser Anteil des Ölaustausches zwischen der Kammer 3 und der Kammer 4 über die Druckleitungen 17 und 18 und das Proportional-Stromregelventil 22 umgeleitet wird. Je höher die Stromstärke ist, desto mehr Öl kann durch das Proportional-Stromregelventil hindurchfließen, sodass der Stoßdämpfer mit steigender Stromstärke weicher eingestellt wird. Der Stoßdämpfer kann daher sowohl semiaktiv als auch passiv betrieben werden.

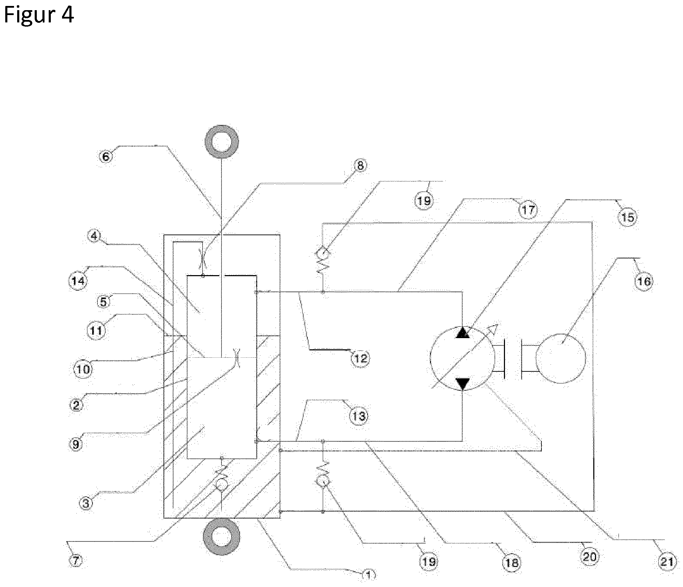

In dem Ausführungsbeispiel gemäß der Figur 4 ist zur Steuerung des Strömungswiderstandes des Arbeitsmediums in der Ventilanordnung 9 des Kolbens 5 ein Hydraulikpumpenantrieb vorgesehen, der hier vorliegend aus einer regelbaren Pumpe 15 und einem Pumpenmotor 16 besteht. Die Pumpe 15 ist dabei reversierbar ausgebildet, sodass sie Öl sowohl aus der unteren Kammer 3 in die obere Kammer 4 des Innenrohres 2 als auch in umgekehrter Richtung pumpen kann. Mittels einer solchen Pumpe 15 kann die bei einem definierten Hub des Kolbens 5 innerhalb des Innenrohres 2 ausgetauschte Ölmenge zwischen der unteren Kammer 3 und der oberen Kammer 4 erhöht beziehungsweise reduziert werden. Dies bewirkt zum Einen eine Erhöhung/Absenkung der Dämpferkräfte entgegen der Einleitung des Öls, zum Anderen kann mit diesem Ausführungsbeispiel eine Sitzhöhenkorrektur bei einem Einsatz eines solchen Dämpfers an einem Sitz erfolgen, beziehungsweise generell eine temporäre Nivellierung des Stoßdämpfers vorgenommen werden.

Da bei Pumpensystemen auch immer mit einer gewissen Leckrate zu rechnen ist, ist in dem Ausführungsbeispiel gemäß Figur 4 eine Leckleitung 21 vorgesehen, mit welcher aus der Pumpe 15 austretendes Öl wieder in den als Tank für das Öl dienenden Behälter 1 zurückgeführt wird.

Ferner weist dieses Ausführungsbeispiel der Figur 4 auch eine Nachsaugleitung 20 auf, mittels welcher die Pumpe 15 beim Betrieb mit der gegebenenfalls notwendigen Nachsaugölmenge versorgt werden kann. Dabei weist diese Nachsaugleitung 20 Anschlüsse an den Druckleitungen 17 und 18 auf wobei diese über Rückschlagventile 19 voneinander getrennt sind.

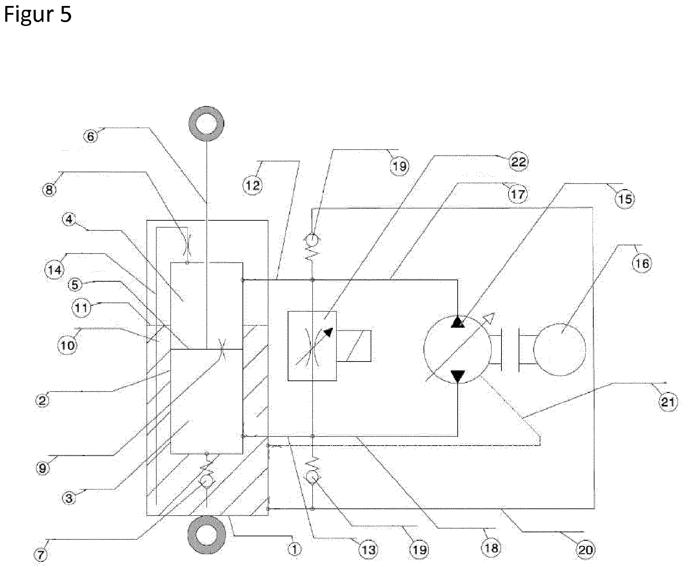

Ferner weisen auch alle Ausführungsbeispiele der Figuren 3 bis 5 ein am oberen Ende des Innenrohres 2 angeordnetes Steigrohr 14 auf, welches über einen Ölsumpfspiegel 11 in den Ölsumpf 10 innerhalb des Behälters 1 hineinragt. Diese Steigleitung 14 dient dazu, dass bei externem Betrieb des Stoßdämpfers, bei dem die Ölmenge zwischen der unteren Kammer 3 und der oberen Kammer 4 über eine Hydraulikpumpe ausgetauscht wird, keine Kavitation entsteht. Solche Kavitationen wären nachteilig für die Arbeitsweise des Stoßdämpfers. Ferner garantiert dieses Steigrohr 14 auch bei externem Betrieb, dass ein geschlossener Ölkreislauf sichergestellt ist.

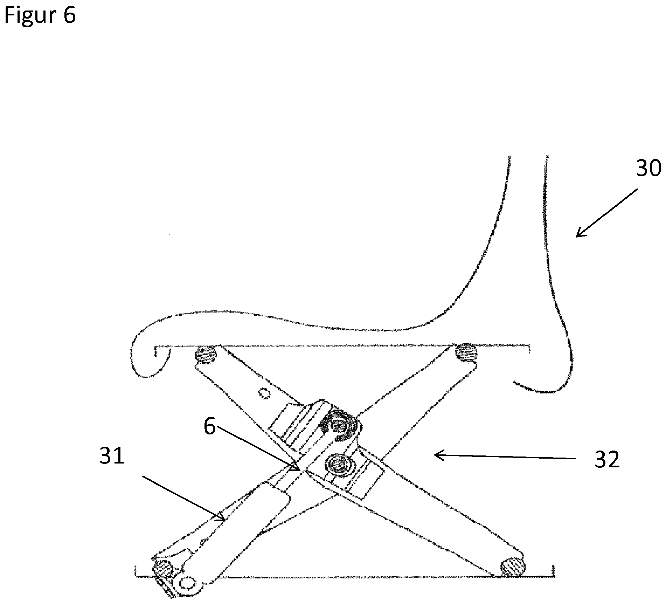

In der Figur 6 ist ein Fahrzeugsitz 30 dargestellt, welcher über eine Federung 32 verfügt, deren Schwingungen mit einem erfindungsgemäßen Stoßdämpfer 31 gedämpft werden.

### Bezugszeichenliste

- 1: Gehäuse
- 2: Innenrohr
- 3: Kammer
- 4: Kammer
- 5: Kolben
- 6: Kolbenstange
- 7: Ventilanordnung
- 8: Ventilanordnung
- 9: Ventilanordnung
- 10: Ölsumpf
- 11: Ölsumpfspiegel
- 12: Anschlusselement
- 13: Anschlusselement
- 14: Steigrohr
- 15: Pumpe
- 16: Motor
- 17: Druckleitung
- 18: Druckleitung
- 19: Rückschlagventil
- 20: Nachsaugleitung
- 21: Leckleitung
- 22: Proportional-Stromregelventil

## Patentansprüche

1. Stoßdämpfer mit:
a) einem Gehäuse (1),
b) einem in dem Gehäuse (1) angeordneten Innenrohr (2),
c) einer in das Innenrohr eintauchenden Kolbenstange (6),
d) einem an dem in das Innenrohr (2) eintauchende Ende der Kolbenstange (6) angeordneten Kolben (5), der das Innere des Innerohres (2) In eine untere Kammer (3) und eine obere Kammer (4) teilt,
e) einer ersten an dem Kolben (5) angeordneten Ventilanordnung (9), mittels welcher ein in dem Innenrohr (2) aufgenommenes Arbeitsmedium beim Verfahren des Kolbens (5) im Innenrohr (2) aus der unteren Kammer (3) in die obere Kammer (4) und umgekehrt strömen kann,
f) einer zweiten an dem oberen Ende des Innenrohrs (2) angeordneten Ventilanordnung (8), mittels welcher das in dem Innenrohr (2) aufgenommene Arbeitsmedium beim Verfahren des Kolbens (5) im Innenrohr (2) aus der oberen Kammer (4) lediglich in das als Tank für das Arbeitsmedium dienende Innere des Gehäuses (1) strömen kann,
g) einer dritten an dem unteren Ende des Innenrohrs (2) angeordneten Ventilanordnung (7), mittels welcher das in dem als Tank dienende Innere des Gehäuses (1) aufgenommene Arbeitsmedium beim Verfahren des Kolbens (5) im Innenrohr (2) aus dem als Tank dienenden Inneren des Gehäuses (1) lediglich in die untere Kammer (3) strömen kann,
**dadurch gekennzeichnet, dass**
das Arbeitsmedium Öl ist und dass an der unteren Kammer (3) des Innenrohres (2) ein erstes Anschlusselement (13) und an der oberen Kammer (4) des Innenrohres (2) ein zweites Anschlusselement (12) zum Anschluss einer Einrichtung zur Steuerung des Strömungswiderstandes des Arbeitsmediums in der ersten Ventilanordnung (9) vorgesehen ist und dass an dem oberen Ende des Innenrohres (2) ein Steigrohr (14) angeordnet ist, welches über einen Ölsumpfspiegel (11) in einen Ölsumpf (10) innerhalb des Gehäuses (1) hineinragt und mittels welchem Öl aus dem als Tank dienenden Gehäuse (1) in die obere Kammer (4) des Innenrohres (2) überführbar ist, wobei der Ölsumpfspiegel (11) benachbart zum Innenrohr (2) angeordnet ist.

2. Stoßdämpfer nach Anspruch 1,
**dadurch gekennzeichnet, dass**
an dem ersten Anschlusselement (13) und an dem zweiten Anschlusselement (12) eine Einrichtung zur Steuerung des Strömungswiderstandes des Arbeitsmediums in der ersten Ventilanordnung (9) angeordnet ist.

3. Stoßdämpfer nach Anspruch 1 oder 2,
**dadurch gekennzeichnet, dass**
als Einrichtung zur Steuerung des Strömungswiderstandes des Arbeitsmediums in der ersten Ventilanordnung (9) ein Magnetventil vorgesehen ist, welches zwischen einer an dem unteren Anschlusselement (13) angeschlossenen Druckleitung (18) und einer an dem oberen Anschlusselement (14) angeschlossenen Druckleitung (17) angeordnet ist.

4. Stoßdämpfer nach Anspruch 1 oder 2,
**dadurch gekennzeichnet, dass**
als Einrichtung zur Steuerung des Strömungswiderstandes des Arbeitsmediums in der ersten Ventilanordnung (9) ein Proportional-Stromregelventil (22) vorgesehen ist, welches zwischen einer an dem unteren Anschlusselement (13) angeschlossenen Druckleitung (18) und einer an dem oberen Anschlusselement (14) angeschlossenen Druckleitung (17) angeordnet ist.

5. Stoßdämpfer nach Anspruch 1 oder 2,
**dadurch gekennzeichnet, dass**
als Einrichtung zur Steuerung des Strömungswiderstandes des Arbeitsmediums in der ersten Ventilanordnung (9) ein Hydraulikpumpenantrieb vorgesehen ist, welcher zwischen einer an dem unteren Anschlusselement (13) angeschlossenen Druckleitung (18) und einer an dem oberen Anschlusselement (14) angeschlossenen Druckleitung (17) angeordnet ist.

6. Stoßdämpfer nach Anspruch 1 oder 2,
**dadurch gekennzeichnet, dass**
als Einrichtung zur Steuerung des Strömungswiderstandes des Arbeitsmediums in der ersten Ventilanordnung (9) einen Hydraulikpumpenantrieb in Kombination mit einer Ventilanordnung, insbesondere eines Magnetventils oder eines Proportional-Stromregelventils (22), vorgesehen ist, wobei diese Einrichtung zwischen einer an dem unteren Anschlusselement (13) angeschlossenen Druckleitung (18) und einer an dem oberen Anschlusselement (14) angeschlossenen Druckleitung (17) angeordnet ist.

7. Stoßdämpfer nach Anspruch 5 oder 6,
**dadurch gekennzeichnet, dass**
der Hydraulikpumpenantrieb eine regelbare Pumpe (15) und einen Motor (16) für die Pumpe (15) aufweist.

8. Stoßdämpfer nach einem der Ansprüche, 5 bis 7
**dadurch gekennzeichnet, dass**
zwischen dem als Tank für das Arbeitsmedium dienenden Gehäuse (1) und dem Hydraulikpumpenantrieb, insbesondere der regelbaren Pumpe (15), eine Leckleitung (21) für das Arbeitsmedium vorgesehen ist.

9. Stoßdämpfer nach einem der Ansprüche 3 bis 8,
**dadurch gekennzeichnet, dass**
zwischen dem als Tank für das Arbeitsmedium dienenden Gehäuse (1) und der unteren Druckleitung (13) und/oder der oberen Druckleitung (14) eine Nachsaugleitung (20) für das Arbeitsmedium vorgesehen ist.

10. Stoßdämpfer nach Anspruch 9,
**dadurch gekennzeichnet, dass**
in der zwischen der Nachsaugleitung (20) und der unteren Druckleitung (13) und/oder der oberen Druckleitung (14) ein Rückschlagventil (19) angeordnet ist.

## Claims

1. Shock absorber comprising:
a) a housing (1),
b) an inner tube (2) arranged in the housing (1),
c) a piston rod (6) that plunges into the inner tube,
d) a piston (5) arranged on the end of the piston rod (6) that plunges into the inner tube (2), which piston divides the inside of the inner tube (2) into a lower chamber (3) and an upper chamber (4),
e) a first valve arrangement (9) arranged on the piston (5), by means of which a working medium received in the inner tube (2) can flow out of the lower chamber (3) into the upper chamber (4) and vice versa when the piston (5) is moved in the inner tube (2),
f) a second valve arrangement (8) arranged at the upper end of the inner tube (2), by means of which, when the piston (5) is moved in the inner tube (2), the working medium received in the inner tube (2) can flow out of the upper chamber (4) only into the inside of the housing (1) used as a tank for the working medium,
g) a third valve arrangement (7) arranged at the lower end of the inner tube (2), by means of which the working medium received in the inside of the housing (1) used as a tank can flow out of the inside of the housing (1) used as a tank only into the lower chamber (3) when the piston (5) is moved in the inner tube (2),
**characterised in that**
the working medium is oil and **in that** a first connection element (13) is provided on the lower chamber (3) of the inner tube (2) and a second connection element (12) is provided on the upper chamber (4) of the inner tube (2) in order to connect a device for controlling the flow resistance of the working medium in the first valve arrangement (9), and **in that** a rising pipe (14) is arranged at the upper end of the inner tube (2) and protrudes through an oil sump level (11) into an oil sump (10) inside the housing (1) and, by means of which pipe, oil can be transferred from the housing (1) used as a tank into the upper chamber (4) of the inner tube (2), the oil sump level (11) being arranged next to the inner tube (2).

2. Shock absorber according to claim 1,
**characterised in that**
a device for controlling the flow resistance of the working medium in the first valve arrangement (9) is arranged on the first connection element (13) and on the second connection element (12).

3. Shock absorber according to either claim 1 or claim 2,
**characterised in that**
the device for controlling the flow resistance of the working medium in the first valve arrangement (9) is a solenoid valve which is arranged between a pressure line (18) connected to the lower connection element (13) and a pressure line (17) connected to the upper connection element (14).

4. Shock absorber according to either claim 1 or claim 2,
**characterised in that**
the device for controlling the flow resistance of the working medium in the first valve arrangement (9) is a proportional flow control valve (22) which is arranged between a pressure line (18) connected to the lower connection element (13) and a pressure line (17) connected to the upper connection element (14).

5. Shock absorber according to either claim 1 or claim 2,
**characterised in that**
the device for controlling the flow resistance of the working medium in the first valve arrangement (9) is a hydraulic pump drive which is arranged between a pressure line (18) connected to the lower connection element (13) and a pressure line (17) connected to the upper connection element (14).

6. Shock absorber according to either claim 1 or claim 2,
**characterised in that**
the device for controlling the flow resistance of the working medium in the first valve arrangement (9) is a hydraulic pump drive in combination with a valve arrangement, in particular a solenoid valve or a proportional flow control valve (22), said device being arranged between a pressure line (18) connected to the lower connection element (13) and a pressure line (17) connected to the upper connection element (14).

7. Shock absorber according to either claim 5 or claim 6,
**characterised in that**
the hydraulic pump drive comprises a controllable pump (15) and a motor (16) for the pump (15).

8. Shock absorber according to any of claims 5 to 7,
**characterised in that**
a leakage pipe (21) for the working medium is provided between the housing (1) used as a tank for the working medium and the hydraulic pump drive, in particular the controllable pump (15).

9. Shock absorber according to any of claims 3 to 8,
**characterised in that**
a feed line (20) for the working medium is provided between the housing (1) used as a tank for the working medium and the lower pressure line (13) and/or the upper pressure line (14).

10. Shock absorber according to claim 9,
**characterised in that**
a non-return valve (19) is arranged between the feed line (20) and the lower pressure line (13) and/or the upper pressure line (14).

## Revendications

1. Amortisseur comportant :
a) un boîtier (1),
b) un tube interne (2) disposé dans le boîtier (1),
c) une tige de piston (6) plongeant dans le tube interne ,
d) un piston (5) qui est disposé à l'extrémité de la tige de piston (6) plongeant dans le tube interne (2) et qui divise l'intérieur du tube interne (2) en une chambre inférieure (3) et une chambre supérieure (4),
e) un premier ensemble soupape (9), qui est disposé sur le piston (5) et au moyen duquel un fluide de travail reçu dans le tube interne (2) peut s'écouler hors de la chambre inférieure (3) dans la chambre supérieure (4) et inversement, lors du déplacement du piston (5) dans le tube interne (2),
f) un deuxième ensemble soupape (8), qui est disposé à l'extrémité supérieure du tube interne (2) et au moyen duquel le fluide de travail reçu dans le tube interne (2) peut s'écouler hors de la chambre supérieure (4) seulement dans l'intérieur du boîtier (1) servant de réservoir pour le fluide de travail, lors du déplacement du piston (5) dans le tube interne (2),
g) un troisième ensemble soupape (7), qui est disposé à l'extrémité inférieure du tube interne (2) et au moyen duquel le fluide de travail reçu dans l'intérieur du boîtier (1) servant de réservoir peut s'écouler hors de l'intérieur du boîtier (1) servant de réservoir seulement dans la chambre inférieure (3), lors du déplacement du piston (5) dans le tube interne (2),
**caractérisé par le fait que**
le fluide de travail est de l'huile et **par le fait que**, sur la chambre inférieure (3) du tube interne (2) est prévu un premier élément de raccordement (13), et, sur la chambre supérieure (4) du tube interne (2), un second élément de raccordement (12), pour le raccordement d'un moyen pour la commande de la résistance à l'écoulement du fluide de travail dans le premier ensemble soupape (9), et **par le fait qu'**à l'extrémité supérieure du tube interne (2) est disposé un tube montant (14), lequel pénètre dans un carter d'huile (10) à l'intérieur du boîtier (1) par une surface du carter d'huile (11) et au moyen duquel de l'huile est transférable hors du boîtier (1) servant de réservoir dans la chambre supérieure (4) du tube interne (2), la surface du carter d'huile (11) étant disposée à proximité du tube interne (2).

2. Amortisseur selon la revendication 1,
**caractérisé par le fait que**
sur le premier élément de raccordement (13) et sur le second élément de raccordement (12) est disposé un moyen pour la commande de la résistance à l'écoulement du fluide de travail dans le premier ensemble soupape (9).

3. Amortisseur selon l'une des revendications 1 ou 2,
**caractérisé par le fait que**
comme moyen pour la commande de la résistance à l'écoulement du fluide de travail dans le premier ensemble soupape (9), est prévue une électrovanne, laquelle est disposée entre une conduite de pression (18) raccordée à l'élément de raccordement inférieur (13) et une conduite de pression (17) raccordée à l'élément de raccordement supérieur (14).

4. Amortisseur selon l'une des revendications 1 ou 2,
**caractérisé par le fait que**
comme moyen pour la commande de la résistance à l'écoulement du fluide de travail dans la premier ensemble soupape (9), est prévue une soupape de régulation de débit proportionnelle (22), laquelle est disposée entre une conduite de pression (18) raccordée à l'élément de raccordement inférieur (13) et une conduite de pression (17) raccordée à l'élément de raccordement supérieur (14).

5. Amortisseur selon l'une des revendications 1 ou 2,
**caractérisé par le fait que**
comme moyen pour la commande de la résistance à l'écoulement du fluide de travail dans le premier ensemble soupape (9), est prévu un entraînement de pompe hydraulique, lequel est disposé entre une conduite de pression (18) raccordée à l'élément de raccordement inférieur (13) et une conduite de pression (17) raccordée à l'élément de raccordement supérieur (14).

6. Amortisseur selon l'une des revendication 1 ou 2,
**caractérisé par le fait que**
comme moyen pour la commande de la résistance à l'écoulement du fluide de travail dans le premier ensemble soupape (9), est prévu un entraînement de pompe hydraulique en combinaison avec un ensemble soupape, en particulier une électrovanne ou une soupape de régulation de débit proportionnelle (22), ce moyen étant disposé entre une conduite de pression (18) raccordée à l'élément de raccordement inférieur (13) et une conduite de pression (17) raccordée à l'élément de raccordement supérieur (14).

7. Amortisseur selon l'une des revendications 5 ou 6,
**caractérisé par le fait que**
l'entraînement de pompe hydraulique présente une pompe réglable (15) et un moteur (16) pour la pompe (15).

8. Amortisseur selon l'une des revendications 5 à 7,
**caractérisé par le fait qu'**
entre le boîtier (1) servant de réservoir pour le fluide de travail et l'entraînement de pompe hydraulique, en particulier de la pompe réglable (15), est prévue une conduite de fuite (21) pour le fluide de travail.

9. Amortisseur selon l'une des revendications 3 à 8,
**caractérisé par le fait qu'**
entre le boîtier (1) servant de réservoir pour le fluide de travail et la conduite de pression inférieure (13) et/ou la conduite de pression supérieure (14), est prévue une conduite de réaspiration (20) pour le fluide de travail.

10. Amortisseur selon la revendication 9,
**caractérisé par le fait qu'**
entre la conduite de réaspiration (20) et la conduite de pression inférieure (13) et/ou la conduite de pression supérieure (14), est disposé un clapet anti-retour (19).
